# EUROPEAN PATENT APPLICATION

(11) **EP 1 793 136 A1**
(43) Date of publication of application: **06.06.2007**
(21) Application number: 06076875.1
(22) Date of filing: 12.10.2006
(51) Int. Cl.: F16D 1/072

(54) **Method for coupling two rotational members**

(30) Priority: 25.10.2005 US 257611
(71) Applicant: Delphi Technologies, Inc., Troy, Michigan 48007 (US)
(72) Inventor: Perrow, Scott Jay, Freeland, MI 48623 (US); Ritter, David Hamilton, Midland, Mi 48640 (US); Charlebois, Christopher Mark, Saginaw, MI 48603 (US)
(74) Representative: Denton, Michael John

(57) **Abstract**

A method for rotationally coupling a first member (12) and a second member (14). In a first step, a first member (12) and a second member (14) are provided with one of the first member (12) and the second member (14) including a portion having cutting edge(s) extending therealong. The second member (14) defines an orifice (14a) for receiving therein at least a portion (12a) of the first member (12). The orifice (14a) is configured relative to the first member (12) such that, as the portion (12a) of the first member (12) is inserted into in the orifice (14a), the cutting edges on one of the first member (12) and the second member (14) engage a surface on the other one of the first member (12) and the second member (14) in a single-pass broaching operation to shave a layer of material from the surface such that the surface acquires a shape substantially conforming to a shape of the cutting edges, thereby providing tight-fitting abutting contact between the surface and the portion incorporating the cutting edges. The portion of the first member (12) is then inserted into the orifice (14a) to perform the broaching operation to generate the abutting contact between the surface and the portion incorporating the cutting edges.

## Description

### BACKGROUND OF THE INVENTION

The present invention relates generally to methods used for joining or coupling members, and more particularly, to a method for rotationally coupling a first member and a second member adapted for receiving a portion of the first member therein.

Some rotational couplings are used in relatively low-torque applications. For example, a splined connection between a halfshaft axle bar and a hub of a tripot-type joint assembly transmits relatively low levels of torque. Generally, the components constituting a rotational coupling assembly are heat-treated after formation of the coupling features, to increase their strength and resilience. However, heat treatment of the components increases their cost, and the heat treatment used for hardening and strengthening components used in higher-torque applications may not be necessary for lower-torque applications. In addition, in rotational couplings utilizing axial splines, finish rolling and broaching of complementary splines on the components is relatively costly. Furthermore, in splined components produced by conventional rolling and broaching, rotational backlash between the mating splines is also a problem. Also, due to mismatches between the mating splines, a portion of the splines may carry a substantially lower proportion of the torque load than the remaining splines. This force imbalance reduces the effective strength of the components, necessitating an increase in component size.

### SUMMARY OF THE INVENTION

The present invention provides a method for rotationally coupling a first member and a second member. In a first step, a first member and a second member are provided, one of the first member and the second member including a portion having cutting edge(s) extending therealong. The second member defines an orifice for receiving therein at least a portion of the first member. The orifice is configured relative to the first member such that, as the portion of the first member is inserted into in the orifice, the cutting edges on one of the first member and the second member engage a surface on the other one of the first member and the second member in a single-pass broaching operation to shave a layer of material from the surface such that the surface acquires a shape substantially conforming to a shape of the cutting edges, thereby providing tight-fitting abutting contact between the surface and the portion having the portion incorporating the cutting edges. The portion of the first member is then inserted into the orifice to generate the abutting contact between the surface and the portion incorporating the cutting edges.

### BRIEF DESCRIPTION OF THE DRAWINGS

In the drawings illustrating embodiments of the present invention:
FIG. 1 is a side view of a halfshaft axle bar incorporating rotational coupling features in accordance with a first embodiment of the method of the present invention;
FIG. 2 is an enlarged view of a portion of the axle bar shown in FIG. 1;
FIG. 3 is an end view of a hub of a tripot-type joint assembly incorporating rotational coupling features in accordance with the first embodiment of the method of the present invention;
FIG. 4 is a side cross-sectional view of a tripot-type joint assembly incorporating the axle bar of FIG. 1 and the hub of FIG. 3;
FIGS. 5 and 6 are side views showing the assembly of FIG. 4 being engaged by a staking tool in accordance with the first embodiment of the method of the present invention;
FIG. 7 is a side view of a halfshaft axle bar incorporating rotational coupling features in accordance with a second embodiment of the method of the present invention;
FIG. 8 is an end view of a hub of a tripot-type joint assembly incorporating rotational coupling features in accordance with the second embodiment of the method of the present invention;
FIG. 9 is an enlarged view of a portion of the assembly shown in FIG. 8; and
FIG. 10 is a cross-sectional side view of the hub shown in FIG. 8 showing the extent of interfering splines along an interior orifice of the hub.

### DESCRIPTION OF THE PREFERRED EMBODIMENTS

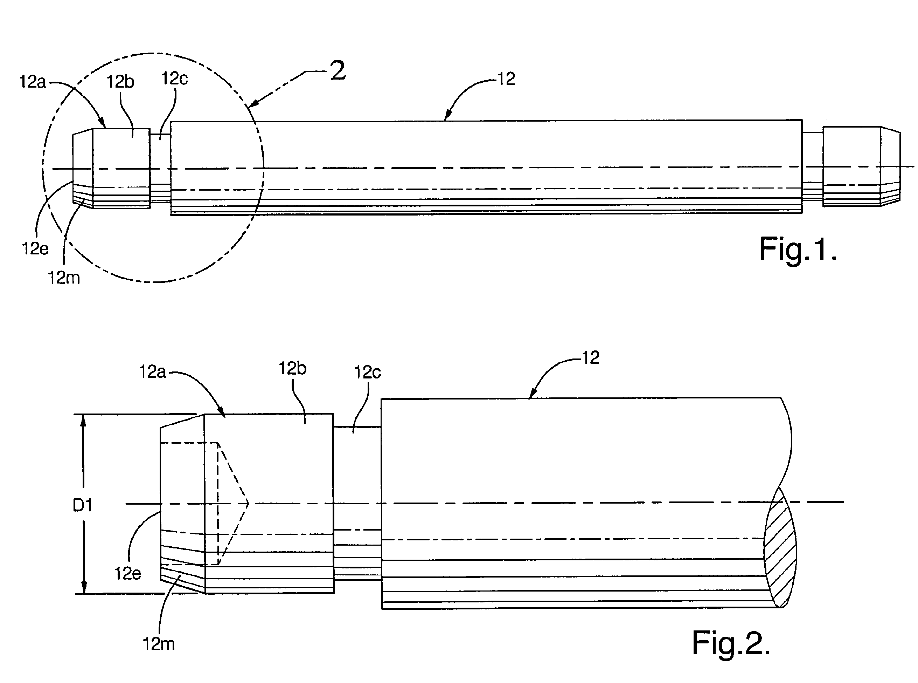

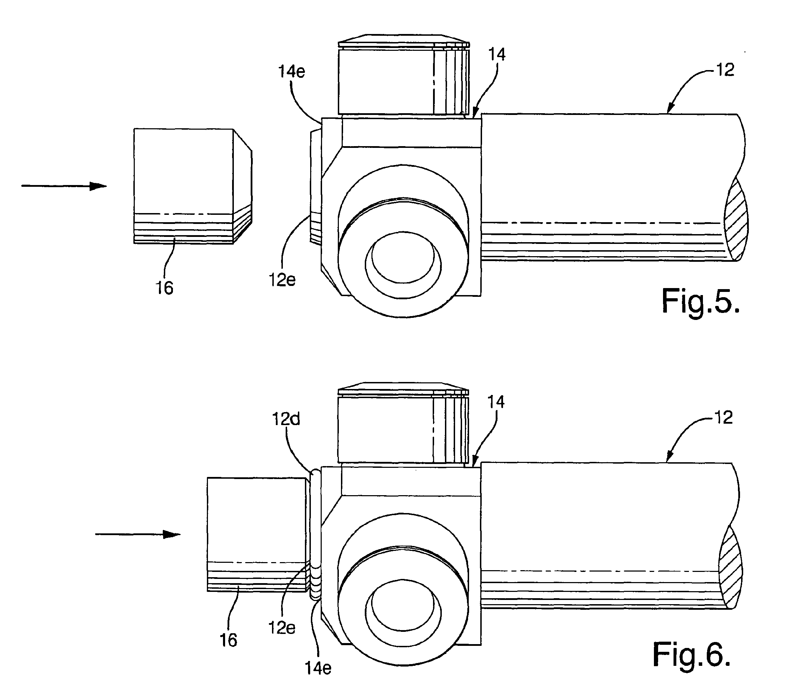

FIGS. 1-6 show rotational coupling between a first member 12 and a second member 14 in accordance with a first embodiment of the method of the present invention. In the embodiment shown in FIGS. 1-6, first member 12 is in the form of a halfshaft axle bar and second member 14 is a hub of a tripot-type joint assembly. U.S. Patent Nos. 6,390,926 and 6,533,667 disclose examples of representative tripot joint assemblies including the basic components described herein, and are incorporated herein by reference.

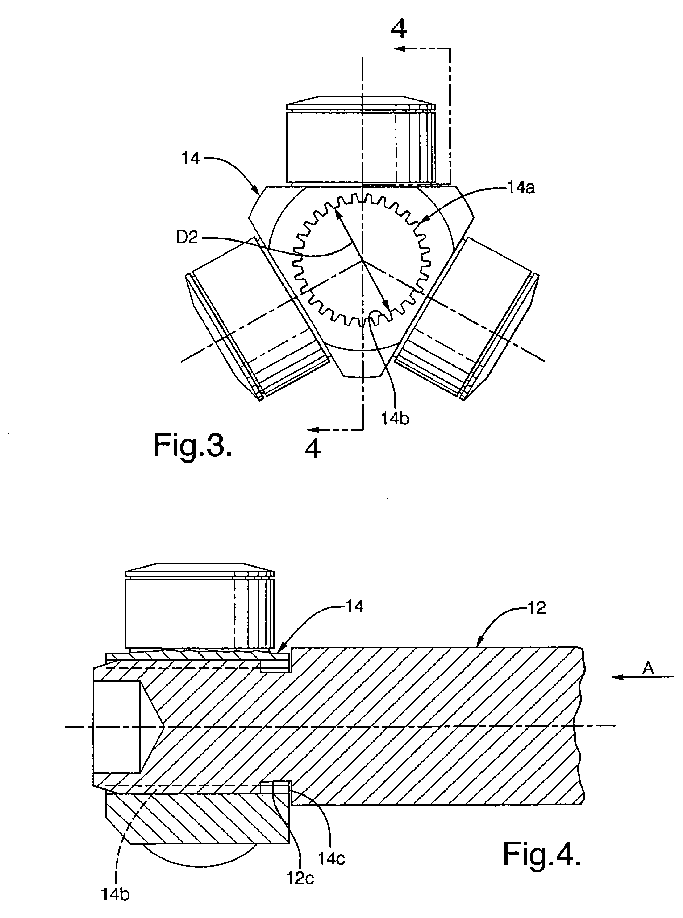

Referring to FIGS. 1 and 2, axle bar 12 includes an insertion portion 12a sized for insertion into a complementary orifice 14a (FIG. 3) formed in hub 14. A chamfer 12m may be provided on an end of axle bar portion 12a to align the axle bar with hub orifice 14a and to ease initial insertion of the axle bar into the hub orifice.

Referring to FIGS. 3 and 4, hub orifice 14a includes a plurality of internal splines 14b extending along an interior of the orifice in the direction of insertion of axle bar portion 12a into orifice 14a. End portions of splines 14b have sharp corners defining cutting edges 14c therealong for engaging a surface 12b of axle bar insertion portion 12a during insertion of the insertion portion into the orifice, in a manner described in greater detail below. More specifically, in the embodiment shown in FIGS. 1-6, axle bar insertion portion 12a and splines 14b extending along the interior of orifice 14a are configured relative to each other such that, as insertion portion 12a is inserted into in the orifice, cutting edges 14c on splines 14b engage surface 12b of insertion portion 12a in a single-pass finish broaching operation to shave a layer of material from surface 12b such that the surface acquires a shape substantially conforming to a shape of the cutting edges 14c.

Referring to FIGS. 3 and 4, prior to the broaching operation, finished splines 14b and cutting edges 14c having the desired geometries are broached or otherwise formed along the interior of the hub orifice 14a. Hub 14 may then be heat-treated as desired to harden the splines and the associated cutting edges. In addition, insertion portion 12a of axle bar 12 is formed with a diameter D 1 slightly larger than the inner diameter D2 of the splined interior portion of the hub. The diameter D1 of axle bar insertion portion 12a and/or the inner diameter D2 of the internally splined portion of hub orifice 14a can be adjusted to regulate the amount of material removed from the surface of insertion portion 12a during broaching by controlling the dimensional interference between diameters D1 and D2. As insertion portion 12a is to be broached by cutting edges 14c formed along hub splines 14b, the insertion portion is formed from a relatively softer material than the spline cutting edges. Thus, heat treatment of axle bar 12 may be omitted, thereby reducing the component cost of the axle bar.

Referring to FIGS. 1-4, as axle bar 12 is inserted into hub orifice 14a in the direction indicated by arrow "A" (FIG. 3), cutting edges 14c formed along end portions of splines 14b engage surface 12b of axle bar 12 in a single-pass broaching operation to shave a layer of material from surface such that the surface acquires a shape substantially conforming to the shapes of the cutting edges. This provides a close-fitting, substantially gap-free abutting contact between surface 12a and cutting edges 14c, thereby substantially eliminating the rotational backlash found in rotational couplings which use conventionally formed interengaging splines. As shown in FIG. 4, splines 14b extend backward from cutting edges 14c in a direction substantially parallel with the insertion direction (indicated by arrow "A" in FIG. 4). Thus, as cutting edges 14c cut along insertion portion surface 12b, the surfaces of the splines engage the cut portions of insertion portion 14a in a tight-fitting abutting contact, thereby rotationally coupling axle bar 12 to hub 14.

Referring again to FIGS. 1 and 2, axle bar 12 includes a chip-breaking portion 12c formed therealong for breaking off chips formed during broaching of the axle bar. In the embodiment shown in FIGS. 1 and 2, the chip-breaking portion is in the form of a groove formed in a surface of the axle bar adjacent insertion portion 12a. However, the chip-breaking portion may have any one of numerous alternative structures or locations. In addition, a chip-breaking portion may be formed on hub 14 rather than on the axle bar. Also, the chip-breaking portion may be omitted and any chips formed during broaching removed from the assembly after coupling of the axle bar and the hub.

When insertion portion 12a is fully inserted into hub orifice 14a and splines 14b have broached the surface of the insertion portion, axle bar 12 and hub 14 may be secured to each other to prevent relative axial movement of the hub and axle bar, thereby preventing removal of the insertion portion from the hub member orifice. Any one of a variety of methods may be used to secure hub 14 and axle bar 12 together. In one method, a portion of either of axle bar 12 or hub 14 is deformed after insertion of the insertion portion to create an interference between the hub and the axle bar. Referring to FIGS. 1, 2, 5 and 6, in a particular embodiment, an end portion 12e of axle bar 12 is staked by application of a staking tool 16 to deform the end portion of the axle bar radially outwardly, creating a flange 12d that abuts and overlaps an outer rim 14e of hub 14. Flange 12d aids in preventing withdrawal of insertion portion 12a from hub orifice 14a. As seen in FIGS. 2, 5 and 6, end portion 12e of axle bar 12 is hollowed out to facilitate alignment with the staking tool. Hollowing of end portion 12e also reduces the amount of axle bar material in the center of bar 12 facilitating radially outward spreading of the remainder of the bar material upon application of axial pressure by the staking tool.

Generally, the hardness of the particular member (either the hub or the axle bar) incorporating the cutting edges will be greater than the hardness of the member being broached in order to ensure formation of a cut surface which conforms to the shapes of the cutting edges without generation of excessive cutting forces and premature dulling of the cutting edges. Desired levels of bulk or surface hardness of axle bar insertion portion 12a and hub interior splines 12c may be achieved in a known manner using appropriate heat-treatment cycles after formation of the cutting edges. To reduce the total cost of an assembly to be used in a low-torque application, the portion of the assembly incorporating the cutting edges may be heat-treated, while the portion that is to be broached is not heat-treated. Alternatively, if there is a sufficient disparity between the hardness of the material forming the cutting edge and the material to be broached, heat treatment may not be necessary for either component. Generally, the member or component incorporating the cutting edges is formed from a metal or metal alloy, while the member or component to be broached may be formed from a metal, metal alloy, or a polymer material.

Although the method of the present invention is described as applied to a tripot joint assembly hub and a halfshaft axle bar, the method described herein is also suitable for rotationally coupling a wide variety of other components or assemblies.

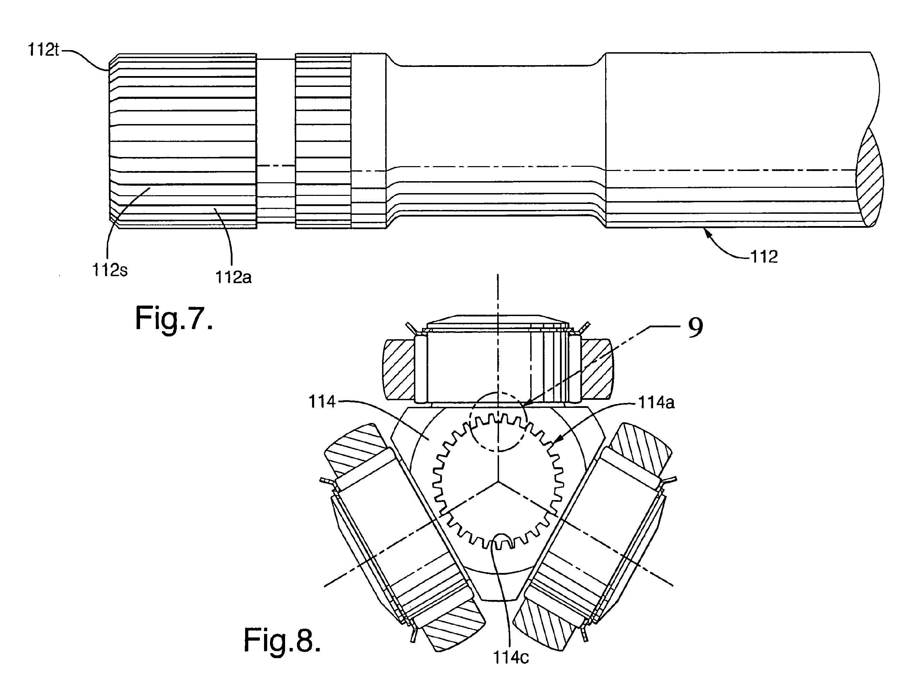

FIGS. 7-10 show rotational coupling between a first member 112 and a second member 114 in accordance with a second embodiment of the method of the present invention. Features in FIGS. 7-10 similar to those shown in FIGS. 1-6 have element numbers similar to those shown in FIGS. 1-6. Referring to FIGS. 7-10, a plurality of external splines 112s is formed along an exterior of insertion portion 112a of an axle bar 112. Splines 112s extend along insertion portion 112a in the direction of insertion of portion 112a into a hub orifice 114a. Sharp corners defining cutting edges 112t are formed along end portions of splines 112s for engaging interior surfaces of the orifice 114a (FIG. 8) in a single-pass broaching operation during insertion of axle bar insertion portion 112a into the orifice. Once formed, external splines 112s are then heat-treated in the conventional manner to provide sufficient surface hardness for the broaching operation.

In addition, a plurality of complementary internal splines 114c is formed extending along an interior of the orifice for engagement with external splines formed along insertion portion 112a. As seen from FIGS. 8-10, hub internal splines 114c have portions configured to provide interferences 114g with cutting edges 112t formed along the end portions of first member external splines 112s when insertion portion 112a is aligned with orifice 114a just prior to insertion into the orifice. Interferences 114g prevent external splines 112s of insertion portion 112a from being inserted into orifice 114a without deformation of internal splines 114c.

Internal interfering splines 114c in along hub orifice 114a may be formed in any one of several ways. For example, in a first step, a plurality of internal splines that are complementary to axle bar external splines is formed along the interior of orifice 114a, thereby providing cavities suitable for receiving corresponding ones of the external splines therein. Portions of the internal splines are then deformed such that the deformed portions of the internal splines interfere with the cutting edges on the axle bar during insertion of the axle bar into the orifice. Alternatively, the internal wall defining the hub orifice may be broached to provide internal splines having the desired profile in a single step. Once formed, internal splines may be subjected to a limited heat-treating operation, if desired.

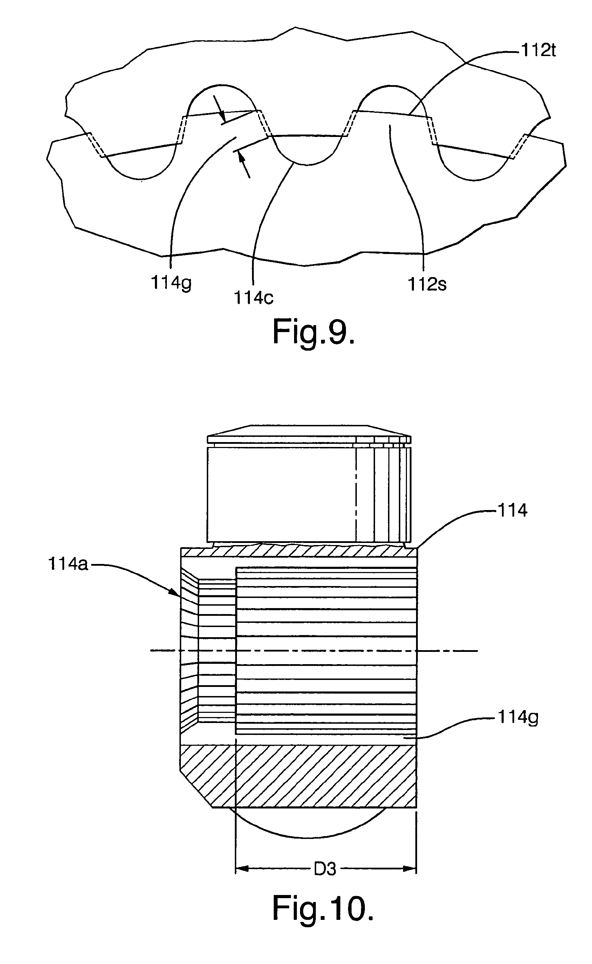

Referring to FIGS. 9 and 10, interference portions 114g extend a predetermined distance D3 along internal splines 114c. This distance may be varied according to design requirements. External splines 112s along axle bar 112 will engage interference portions 114g along length D3 during insertion of the axle bar into hub orifice 114a.

The method of rotationally coupling axle bar 112 and hub 114 is substantially the same as described for the embodiment shown in FIGS. 1-6. As insertion portion 112a is inserted into hub orifice 114a, cutting edges 112t contact the interfering end portions 114g of hub splines 114c and engage the interfering portions in a single-pass broaching operation that shaves a thin layer of material from the hub splines during insertion. This provides a close-fitting, substantially gap-free abutting contact between internal splines 114c and cutting edges 112t and splines 112s, thereby substantially eliminating the rotational backlash found in rotational couplings which use conventionally formed interengaging splines. Engagement between internal splines 114c and insertion portion 112a incorporating the external splines provides rotational coupling of axle bar 112 to hub 114.

The method for providing rotational coupling described herein provides several important advantages over conventional methods. The requirement for component heat-treatment is obviated or reduced, thereby reducing component fabrication costs. The need for a conventional external spline rolling operation is also obviated, further reducing costs. In addition, the method described herein for rotationally coupling the components provides an extremely tight fit between the components, thereby substantially eliminating rotational backlash between the coupling features of the components. Furthermore, as all of the mating splines are in intimate contact with each other, all of the splines act to transmit the applied torque and the forces on the splines are more evenly distributed, resulting in more efficient use of the component.

The foregoing description of several expressions of embodiments of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. A method of rotationally coupling a first member and a second member, the method comprising the steps of:
providing a first member and a second member, one of the first member and the second member including a portion having at least one cutting edge extending therealong, the second member defining an orifice for receiving therein at least a portion of the first member, the orifice being configured relative to the first member such that, as the at least a portion of the first member is inserted into in the orifice, the at least one cutting edge on one of the first member and the second member engages a surface on the other one of the first member and the second member in a single-pass broaching operation to shave a layer of material from the surface such that the surface acquires a shape substantially conforming to a shape of the at least one cutting edge, thereby providing abutting contact between the surface and the portion having the at least one cutting edge; and
inserting the portion of the first member into the orifice to perform the broaching operation to generate the abutting contact between the surface and the portion having the at least one cutting edge.

2. The method of claim 1 wherein the step of providing a first member and a second member comprises the step of forming a chip-breaking portion on one of the first member and the second member for breaking off chips of material formed during the broaching operation.

3. The method of claim 1 further comprising the step of deforming at least one of the first member and the second member after insertion of the portion of the first member into the orifice to provide an interference between the second member and the first member to prevent removal of the portion of the first member from the second member orifice.

4. The method of claim 3 further comprising the step of deforming a portion of the first member.

5. The method of claim 1 wherein the first member is a shaft and the second member is a hub.

6. The method of claim 1 wherein the step of providing the first member includes the step of forming the portion having the at least one cutting edge on the first member.

7. The method of claim 6 wherein the step of forming the portion having the at least one cutting edge on the first member comprises the step of forming a plurality of external splines extending along the first member in a direction of insertion of the portion of the first member into the orifice, and wherein the at least one cutting edge is formed along end portions of the splines for engaging a surface of the second member in a single-pass broaching operation during insertion of the portion of the first member into the orifice.

8. The method of claim 7 wherein the step of providing the second member comprises the step of forming a plurality of internal splines extending along an interior of the orifice, the second member internal splines having portions dimensioned to provide an interference with the at least one cutting edge formed along the end portions of first member external splines such that the at least one cutting edge engages the interfering portions of the internal splines in a single-pass broaching operation during insertion of the portion of the first member into the orifice.

9. The method of claim 8 wherein the step of forming a plurality of internal interfering splines in the second member further comprises the steps of:
forming a plurality of internal splines that are complementary to the first member external splines, thereby providing cavities suitable for receiving corresponding ones of the external splines therein; and
deforming portions of the internal splines such that the deformed portions of the internal splines interfere with the at least one cutting edge during insertion of the portion of the first member into the orifice.

10. The method of claim 6 wherein the step of providing the first member further comprises the step of heat-treating the first member such that a hardness of the at least one cutting edge is greater than a hardness of the second member.

11. The method of claim 8 wherein the step of providing the second member further comprises the step of heat-treating the second member after forming the plurality of internal splines.

12. The method of claim 1 wherein the portion having the at least one cutting edge is included in the second member.

13. The method of claim 12 wherein the step of providing the second member comprises the step of forming a plurality of internal splines extending along the orifice in a direction of insertion of the portion of the first member into the orifice, and wherein the at least one cutting edge is formed along end portions of the splines for engaging a surface of the portion of the first member in a single-pass broaching operation during insertion of the portion of the first member into the orifice.

14. The method of claim 12 wherein the step of providing the second member further comprises the step of heat-treating the second member such that a hardness of the at least one cutting edge is greater than a hardness of the first member.

15. The method of claim 12 wherein the step of providing the first member further comprises the step of providing a chip-breaking portion formed on the first member for breaking off chips of material formed during the broaching operation.
